# EUROPEAN PATENT APPLICATION

(11) **EP 4 390 403 A1**
(43) Date of publication of application: **26.06.2024**
(21) Application number: 22858145.0
(22) Date of filing: 15.06.2022
(51) Int. Cl.: G01N 35/10

(54) **AUTOMATIC ANALYSIS DEVICE AND AUTOMATIC ANALYSIS METHOD**

(30) Priority: 19.08.2021 JP 2021134072
(71) Applicant: HITACHI HIGH-TECH CORPORATION, Tokyo 105-6409 (JP)
(72) Inventor: YAMAUCHI Masato, Tokyo 105-6409 (JP); MORI Takamichi, Tokyo 105-6409 (JP); TAKAHASHI Kenichi, Tokyo 105-6409 (JP)
(74) Representative: Strehl Schübel-Hopf & Partner
(86) International application number: PCT/JP2022/023888
(87) International publication number: WO 2023/021821

(57) **Abstract**

An object of the present invention is to provide an automatic analysis device and an automatic analysis method that inhibit an increase in a usage amount of a detergent or a processing time due to excessive additional cleaning. According to the present invention, an automatic analysis device includes: a dispensing mechanism configured to aspirate and discharge a specimen; a cleaning unit configured to clean the dispensing mechanism; and a control unit configured to determine whether to perform additional cleaning in addition to normal cleaning performed at each dispensing. The control unit is configured to perform the determination based on a use of a pre-specimen dispensed before a post-specimen to be dispensed by the dispensing mechanism.

## Description

### Technical Field

The present invention relates to an automatic analysis device and an automatic analysis method.

### Background Art

An automatic analysis device includes one or more dispensing mechanisms and performs quantitative and qualitative analysis on a biological sample such as blood and urine by repeating dispensing by a dispensing mechanism and cleaning of the dispensing mechanism after the dispensing. Nozzles of the dispensing mechanism physically come into contact with a plurality of specimens. Therefore, when cleaning of pre-specimens is not sufficient, the pre-specimens are brought to post-specimens (carry-over), which is a cause of a measurement error. To prevent such cross-contamination, additional cleaning in which a predetermined detergent is used is performed in addition to normal cleaning after the dispensing.

For example, PTL 1 discloses that it is determined whether to perform additional cleaning based on types of pre-specimen and post-specimen, that is, urine or feces.

### Citation List

### Patent Literature

PTL 1: JP2016-206186A

### Summary of Invention

### Technical Problem

In the technique disclosed in PTL 1, since necessity or non-necessity of additional cleaning is determined based on only types of specimen, determination accuracy is low and the additional cleaning is likely to be performed even for an originally unnecessary analysis condition. In this case, not only is an amount of consumed detergent increased, but a whole processing time is also lengthened.

An object of the present invention is to provide an automatic analysis device and an automatic analysis method that inhibit an increase in a usage amount of a detergent or a processing time due to excessive additional cleaning.

### Solution to Problem

To solve the above problem, for example, configurations in the claims are adopted.

The present application includes a plurality of means for solving the above problem. For example, an automatic analysis device includes: a dispensing mechanism configured to aspirate and discharge a specimen; a cleaning unit configured to clean the dispensing mechanism; and a control unit configured to determine whether to perform additional cleaning in addition to normal cleaning performed at each dispensing. The control unit is configured to perform the determination based on a use of a pre-specimen dispensed before a post-specimen to be dispensed by the dispensing mechanism.

### Advantageous Effects of Invention

According to the present invention, it is possible to provide an automatic analysis device and an automatic analysis method that inhibit an increase in a usage amount of a detergent or a processing time due to excessive additional cleaning.

Other problems, configurations, and effects will be clarified in description of the following embodiments.

### Brief Description of Drawings

[Fig. 1] Fig. 1 is a diagram illustrating a schematic configuration of an automatic analysis device according to an embodiment of the present invention.
[Fig. 2] Fig. 2 is a diagram illustrating an example of a setting screen of additional cleaning.
[Fig. 3] Fig. 3 is a flowchart illustrating a flow when determining necessity or non-necessity of the additional cleaning.
[Fig. 4] Fig. 4 is a diagram illustrating an example of analysis request information related to Example 1.
[Fig. 5] Fig. 5 is a diagram illustrating an example of analysis request information related to Example 2.

### Description of Embodiments

Hereinafter, an embodiment of the present invention will be described with reference to the drawings.

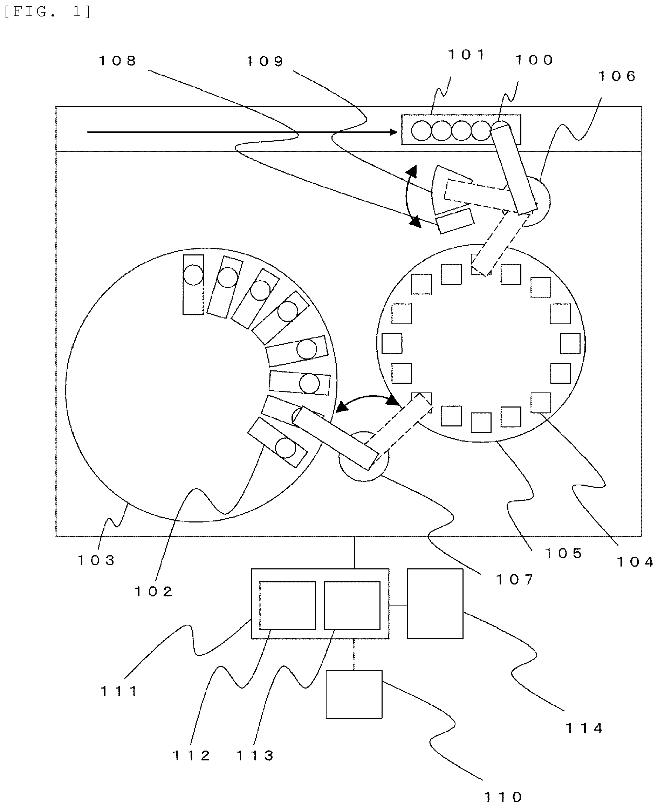

Fig. 1 is a diagram illustrating a schematic configuration of an automatic analysis device according to the present embodiment. As illustrated in Fig. 1, the automatic analysis device includes: a specimen rack 101 in which a plurality of specimen containers 100 holding a specimen (sample) can be mounted; a reagent disk 103 in which a plurality of reagent containers 102 holding a reagent can be amounted on a concentric circumference; a reaction disk 105 in which a plurality of reaction containers 104 are disposed on a circumference; a specimen dispensing mechanism 106 that is capable of dispensing a specimen from the specimen rack 101 to the reaction disk 105; a reagent dispensing mechanism 107 that is capable of dispensing a reagent from the reagent disk 103 to the reaction disk 105; a cleaning unit 108 for cleaning the dispensing mechanism; a detergent setup unit 109 in which a detergent for additional cleaning to be described below is set; a computer 111; a display unit 114 that displays and outputs an analysis result or the like; and an input unit 110 that is operated by an operator or the like when analysis request information or the like is input to the computer 111.

The specimen dispensing mechanism 106 has nozzles of which tips are oriented downward, and dispensing work is performed such that a specimen is aspirated and discharged by the nozzles. The computer 111 includes a control unit 112 that controls each mechanism in accordance with input information and a storage unit 113 that is a database storing various types of information. Further, a mouse or a keyboard is a specific example of the input unit 110.

Each mechanism of the automatic analysis device basically operates as follows in an analysis process. First, the specimen rack 101 moves the specimen container 100 to a position of the specimen dispensing mechanism 106. Subsequently, the specimen dispensing mechanism 106 aspirates a specimen in the specimen container 100 and discharges the specimen to the reaction container 104 on the reaction disk 105. The reagent dispensing mechanism 107 aspirates a reagent from the reagent container 102 on the reagent disk 103 and similarly discharges the reagent to the reaction container 104 on the reaction disk 105. The nozzle of the dispensing mechanism completing the dispensing is cleaned by the cleaning unit 108.

As described above, when a specimen which is an analysis target is aspirated, the nozzle of the specimen dispensing mechanism 106 comes into contact with the specimen. Therefore, an outer wall and an inner wall of a contact portion of the nozzle become contaminated. When a post-specimen which is a subsequent analysis target is aspirated using the nozzle in this state, a pre-specimen remaining in the immediately previous dispensing is mixed with the aspirated post-specimen and the pre-specimen is likely to be mixed in a container containing the post-specimen. Accordingly, the cleaning unit 108 prevents cross-contamination by cleaning the outer wall and the inner wall of the nozzle contaminated by the pre-specimen with water (normal cleaning) after the discharging of the pre-specimen and before the aspirating of the post-specimen. However, depending on a situation of the pre-specimen or the post-specimen, the cross-contamination cannot be sufficiently prevented only by the normal cleaning performed at each dispensing in some cases. Therefore, additional cleaning is performed apart from the normal cleaning.

The control unit 112 determines whether to perform additional cleaning after the normal cleaning. Specifically, the control unit 112 determines necessity or non-necessity of the additional cleaning and further determines a cleaning pattern in the case of necessity of the additional cleaning by acquiring pre-specimen information (a use of the pre-specimen, the number of times of dispensing, and the like) and post-specimen information (a test item of the post-specimen, a specimen type, and the like) stored in the storage unit 113 and referring to a preset condition. Here, the input unit 110 registers a specimen use of the pre-specimen or the number of times of dispensing in advance in the storage unit 113. Therefore, even when the analysis of the pre-specimen is not completed, necessity or non-necessity of the additional cleaning can be determined. Thus, the additional cleaning or the analysis of the post-specimen can be started immediately.

The additional cleaning in the present embodiment is not limited to cleaning performed using a dedicated detergent. Cleaning in which water is used may be performed as long as the cleaning is cleaning performed additionally after the normal cleaning. It is assumed that the additional cleaning in which water is used is performed when carry-over can be highly likely to be avoided even in the normal cleaning and contamination is not made to the extent that a detergent is used.

The control unit 112 according to the present embodiment can reliably prevent the carry-over while inhibiting an increase in a usage amount of the detergent or a processing time due to excessive additional cleaning by individually determining an optimum cleaning pattern in accordance with the pre-specimen information and the post-specimen information. For example, when a combination of the pre-specimen information and the post-specimen information is a predetermined condition and it is considered that an influence of the pre-specimen on the post-specimen is small, a cleaning pattern of the additional cleaning can be set only with water and a usage amount of the detergent can also be reduced. As examples of the cleaning pattern, an alkaline detergent, an acid detergent, and a combination thereof are assumed in addition to only water. Accordingly, a plurality of types of detergents can be stored in the detergent setup unit 109.

In the present embodiment, the specimen use of the pre-specimen is set as a condition for the control unit 112 to determine necessity or non-necessity and a pattern of the additional cleaning. Examples of the specimen use to be set include a patient specimen of which concentration is unknown (specimen sample), a control specimen of which concentration is known (accuracy management sample), and a calibrator of which concentration is known (calibration sample). When the specimen use is not set as a condition, excessive additional cleaning is performed in some cases so that a patient specimen of which concentration is unknown can be treated as the pre-specimen, in other words, the carry-over is not performed even when a concentration of the pre-specimen is high. For example, actually, even when the pre-specimen is a control specimen of which concentration is known or a patient specimen of which concentration is average, it is assumed that the pre-specimen is a patient specimen of which concentration is high and, originally, unnecessary additional cleaning is performed in some cases.

However, the control unit 112 according to the present embodiment determines the additional cleaning and the pattern based on which specimen a specimen use of the pre-specimen corresponds to. Therefore, when the pre-specimen is a specimen of which concentration is known, such as a control specimen, a level of the additional cleaning can be lowered or the additional cleaning itself can be omitted compared to when the pre-specimen is a patent specimen.

In the present embodiment, as the condition for the control unit 112 to determine necessity or non-necessity and a pattern of the additional cleaning, the number of times the pre-specimen is dispensed is set. When the number of times the pre-specimen is dispensed is large, the number of times the nozzle comes into contact with the specimen increases and a degree of contamination of the nozzle increases to that extent. Therefore, the necessity of the additional cleaning is high. Conversely, when the number of times the pre-specimen is dispensed is small, the degree of contamination of the nozzle is small. Therefore, the necessity of the additional cleaning is low. Accordingly, only when the number of times the pre-specimen is dispensed is a predetermined number or more, the control unit 112 determines that the additional cleaning of a predetermined pattern is performed.

As described above, the automatic analysis device according to the present embodiment acquires the specimen use of the pre-specimen or the number of times the pre-specimen is dispensed in advance as information which is a reference of the degree of contamination of the nozzle by the pre-specimen and determines necessity or non-necessity of the additional cleaning. Therefore, it is possible to reliably prevent the carry-over while inhibiting an increase in a usage amount of a detergent or a processing time due to excessive additional cleaning.

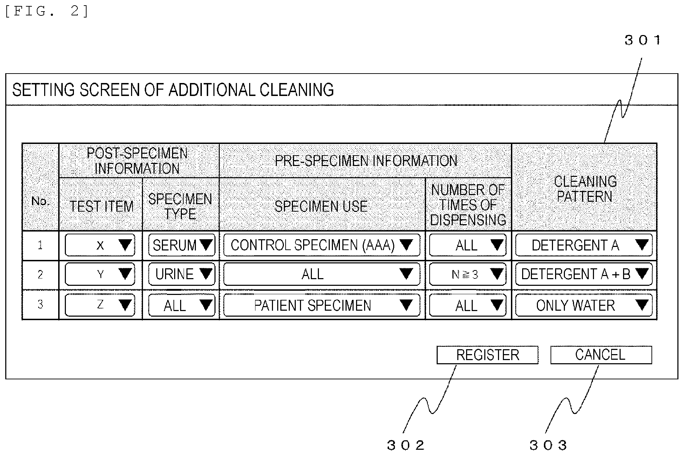

Fig. 2 is a diagram illustrating an example of a setting screen of the additional cleaning. As illustrated in Fig. 2, the setting screen of the additional cleaning includes a registration button 302 and a cancellation button 303 in addition to a setting region 301. In Fig. 2, only information regarding No. 1 to No. 3 is displayed in the setting region 301, but other information can also be displayed with a screen button (not illustrated). When new additional cleaning is set, an operator or the like uses the input unit 110 to select each piece of information which is a condition from a plurality of candidates by pull-down or directly inputs the information using a keyboard or the like. The registration button 302 has a function of registering setting of the additional cleaning (storing the setting of the additional cleaning in the storage unit 113) and the cancellation button 303 has a function of closing the setting screen without storing the setting of the additional cleaning.

Fig. 2 illustrates an example in which, in addition to the cleaning pattern, a test item and a specimen type are set as the post-specimen information and a specimen use and the number of times of dispensing are set as the pre-specimen information. The specimen type is a type of specimen such as serum, urine, plasma, or cerebrospinal fluid. The test item corresponds to occult blood, receptor protein, or the like, for example, when the specimen type is urine.

As the specimen use, for example, all control specimens can be selected and the control specimen can also be individually selected from a plurality of candidates for the control specimen. Accordingly, excessive additional cleaning can be omitted when a type of designated control specimen is a specimen of which concentration is a standard concentration. Appropriate additional cleaning can be performed when the type of designated control specimen is a specimen of which concentration is high. Thus, determination accuracy of the additional cleaning by the control unit 112 is improved. Similarly, all calibrators can be selected and the calibrator can also be individually selected from a plurality of candidates for the calibrator. In No. 1 in Fig. 2, only control specimen AAA is individually set.

For each setting item other than the cleaning pattern, in addition to selecting one item from a plurality of candidates, it is also possible to select all the candidates as targets (for example, the number of times of dispensing of No. 1 in Fig. 2). Contents which can be set in the setting screen are not limited to the example of Fig. 2. For example, in addition to the specimen use or the number of times of dispensing, a specimen type can also be set as the pre-specimen information. When a condition for performing additional cleaning can be set in more detail, inhibition of excessive additional cleaning and prevention of the carry-over can be compatible with high accuracy.

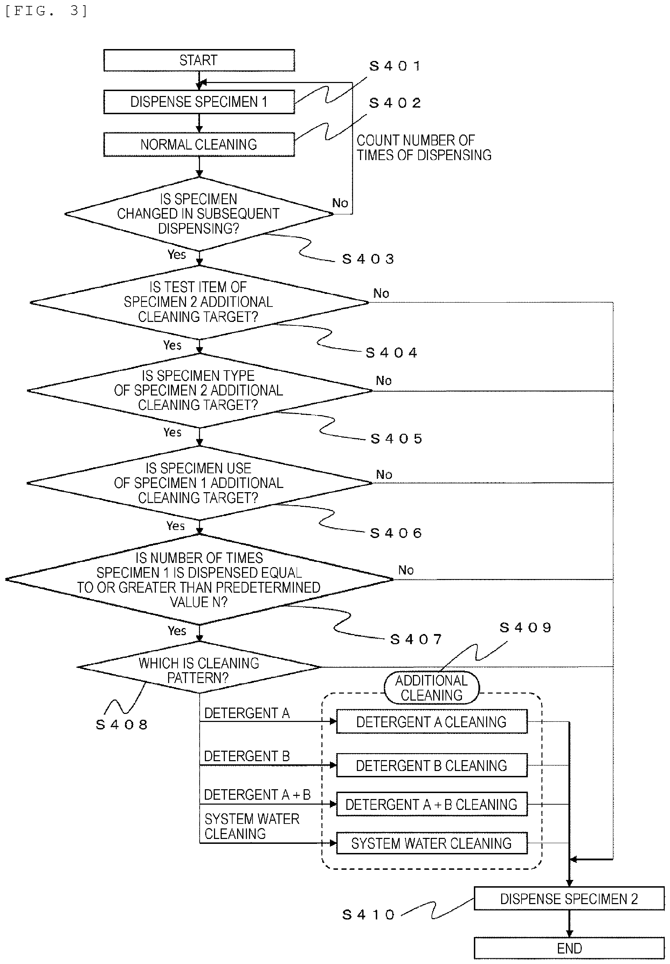

Fig. 3 is a flowchart illustrating a flow when determining necessity or non-necessity of the additional cleaning in a case where a dispensing target is switched from a specimen 1 (pre-specimen) to a subsequent specimen 2 (post-specimen).

First, the specimen dispensing mechanism 106 dispenses the specimen 1 from the specimen container 100 to the reaction container 104 on the reaction disk 105 (step S401).

Subsequently, the specimen dispensing mechanism 106 is moved to a position of the cleaning unit 108 and the cleaning unit 108 performs normal cleaning (step S402).

The control unit 112 determines whether the specimen is changed in subsequent dispensing based on analysis request information registered in the storage unit 113 (step S403). When the specimen is not changed, the process returns to step S401. At this time, the number of times of returning from step S403 to step S401 is stored as the number of times of dispensing N in the storage unit 113.

When the specimen to be dispensed is changed, the control unit 112 determines whether a test item of the specimen 2 is set as an additional cleaning target (step S404). When a condition of the test item is not satisfied, the specimen dispensing mechanism 106 dispenses the specimen 2 without performing the additional cleaning (step S410).

When the condition of the test item is satisfied in step S404, the control unit 112 determines whether the specimen type of the specimen 2 is set as an additional cleaning target (step S405). When a condition of the specimen type is not satisfied, the specimen dispensing mechanism 106 dispenses the specimen 2 without performing the additional cleaning (step S410).

When the condition of the specimen type is satisfied in step S405, the control unit 112 determines whether the specimen use of the specimen 1 is set as an additional cleaning target (step S406). When a condition of the specimen use is not satisfied, the specimen dispensing mechanism 106 dispenses the specimen 2 without performing the additional cleaning (step S410).

When the condition of the specimen use is satisfied in step S406, the control unit 112 determines whether the number of times the specimen 1 is dispensed is set as an additional cleaning target (for example, the number of times of dispensing is equal to or greater than a predetermined value N) (step S407). When a condition of the times of dispensing is not satisfied, the specimen dispensing mechanism 106 dispenses the specimen 2 without performing the additional cleaning (step S410).

When the condition of the times of dispensing is satisfied in step S407, the control unit 112 determines which is a cleaning pattern corresponding to the additional cleaning (step S408). Then, after the cleaning unit 108 performs the additional cleaning in accordance with the determined cleaning pattern (step S409), the specimen dispensing mechanism 106 dispenses the specimen 2 (step S410) .

The additional cleaning may be performed at a location different from the cleaning unit 108 in which the normal cleaning is performed. Each determination in steps S404 to S407 may be performed in a different order or may be performed simultaneously.

Next, a method of determining necessity or non-necessity of the additional cleaning will be described by giving a specific example. As a premise, when an operator or the like performs the setting of the additional cleaning by using the input unit 110 before an analysis request, the control unit 112 stores the setting information in the storage unit 113. Here, it is assumed that the conditions of the additional cleaning illustrated in Fig. 2 are set. The operator or the like performs the setting of the analysis request by using the input unit 110, the control unit 112 stores the setting information in the storage unit 113.

### [Example 1]

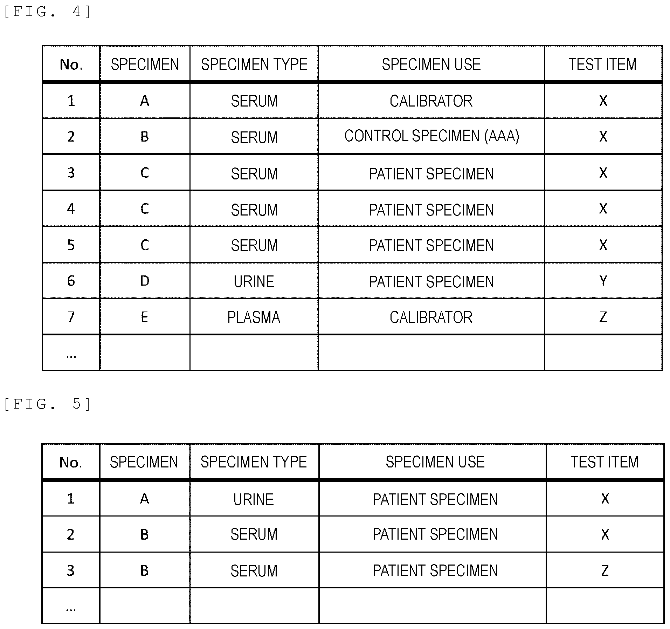

Fig. 4 is a diagram illustrating an example of analysis request information related to Example 1. In the present example, a method of determining specific additional cleaning when the analysis request information illustrated in Fig. 4 is set will be described with reference to Fig. 3. First, the specimen dispensing mechanism 106 dispenses specimen A corresponding to first analysis request No. 1 (step S401), and then the cleaning unit 108 performs normal cleaning on a nozzle of the specimen dispensing mechanism 106 (step S402).

Since the specimen is switched from specimen A to specimen B in subsequent analysis request No. 2, Yes is determined in step S403 and the process proceeds to step S404. Here, since a test item X of specimen B is registered in setting No. 1 of the additional cleaning (see Fig. 2), the process proceeds to step S405. Since serum which is a specimen type of specimen B matches a condition of setting No. 1 (see Fig. 2), the process proceeds to step S406. However, since a specimen use of specimen A is a calibrator, the condition of setting No. 1 of the additional cleaning is not matched (see Fig. 2). Accordingly, the additional cleaning is not performed between analysis requests No. 1 and No. 2 and dispensing of subsequent specimen is started (step S410).

Since the specimen is switched from specimen B to specimen C in subsequent analysis request No. 3, Yes is determined in step S403 and the process proceeds to step S404. Here, since text item X of specimen C is registered in setting No. 1 of the additional cleaning (see Fig. 2), the process proceeds to step S405. Since serum which is a specimen type of specimen C matches the condition of setting No. 1 (see Fig. 2), the process proceeds to step S406. Here, since a specimen use of specimen B is a control specimen (control name AAA), the condition of setting No. 1 of the additional cleaning is matched and the process proceeds to step S407 (see Fig. 2). Further, since the condition of the number of times of dispensing of setting No. 1 is all the number of times of dispensing (see Fig. 2), the condition is also matched and the process proceeds to step S408. Since the cleaning pattern corresponding to setting No. 1 is additional cleaning in which detergent A is used (see Fig. 2), detergent A cleaning is performed in step S409. In this way, the additional cleaning is performed between analysis requests No. 2 and No. 3, and then dispensing of a subsequent specimen is started (step S410). Since specimen C remains without switching the specimen in subsequent analysis requests No. 4 and No. 5, as illustrated in Fig. 4, the additional cleaning is not performed.

Since the specimen is switched from specimen C to specimen D in subsequent analysis request No. 6, Yes is determined in step S403 and the process proceeds to step S404. Here, since test item Y of specimen D is registered in setting No. 2 of the additional cleaning (see Fig. 2), the process proceeds to step S405. Since urine which is a specimen type of specimen D matches a condition of setting No. 2 (see Fig. 2), the process proceeds to step S406. Here, since targets of the specimen use (pre-specimen) of setting No. 2 are all the specimen uses (see Fig. 2), specimen C which is a patient specimen is also a target and the process proceeds to step S407. Further, since specimen C is dispensed three times in analysis requests No. 3 to No. 5, the condition of the number of times of dispensing of setting No. 2, that is, the condition of the number of times of dispensing N ≥ 3, is matched and the process proceeds to step S408. Since the cleaning pattern corresponding to setting No. 2 is additional cleaning in which detergents A and B are used (see Fig. 2), detergent A + B cleaning is performed in step S409. In this way, dispensing of subsequent specimen is started after the additional cleaning is performed between analysis requests No. 5 and No. 6 (step S410).

Since the specimen is switched from specimen D to specimen E in subsequent analysis request No. 7, Yes is determined in step S403 and the process proceeds to step S404. Here, since text item Z of specimen E is registered in setting No. 3 of the additional cleaning (see Fig. 2), the process proceeds to step S405. Here, since targets of the specimen type (post-specimen) of setting No. 3 are all the specimen types (see Fig. 2), plasma which is a specimen type of specimen E is also a target and the process proceeds to step S406. Since a specimen use of specimen D is a patient specimen, the condition of the condition of setting No. 3 of the additional cleaning is matched (see Fig. 2) and the process proceeds to step S407. Further, since the condition of the number of times of dispensing (pre-specimen) of setting No. 3 is all the number of times of dispensing (see Fig. 2), the condition is also matched and the process proceeds to step S408. Since the cleaning pattern corresponding to setting No. 3 is additional cleaning in which only water is used (see Fig. 2), system water cleaning is performed in step S409.

### [Example 2]

In Example 1, when a specimen is switched to another specimen, necessity or non-necessity of the additional cleaning is determined in consideration of the information, such as the specimen use or the like, regarding the pre-specimen immediately before the switching and the information, such as the test item, regarding the post-specimen immediately after the switching. In Example 2, when the same post-specimen is used for a plurality of test items, necessity or non-necessity of the additional cleaning is determined in consideration of not only a post-specimen dispensed for a predetermined test item immediately after switching but also a post-specimen dispensed for another test item subsequently. Accordingly, in the present example, when test items of a post-specimen immediately after switching are not additional cleaning targets and the test items of the same post-specimen which is dispensed subsequently include an additional cleaning target, the additional cleaning is performed before initial dispensing of the post-specimen.

Fig. 5 is a diagram illustrating an example of analysis request information related to Example 2. In the present example, a method of determining specific additional cleaning when the analysis request information illustrated in Fig. 5 is set will be described with reference to Fig. 3. First, the specimen dispensing mechanism 106 dispenses specimen A corresponding to first analysis request No. 1 (step S401), and then the cleaning unit 108 performs normal cleaning on a nozzle of the specimen dispensing mechanism 106 (step S402).

Since the specimen is switched from specimen A to specimen B in subsequent analysis request No. 2, Yes is determined in step S403 and the process proceeds to step S404. Here, since the test item X of specimen B is registered in setting No. 1 of the additional cleaning (see Fig. 2), the process proceeds to step S405. Since serum which is a specimen type of specimen B matches a condition of setting No. 1 (see Fig. 2), the process proceeds to step S406. However, since a specimen use of specimen A is a patent specimen, the condition of setting No. 1 of the additional cleaning is not matched (see Fig. 2). Accordingly, in the case of Example 1, additional cleaning is not performed between analysis requests No. 1 and No. 2, and additional cleaning is not performed between analysis requests No. 2 and No. 3 since the specimen is not switched.

On the other hand, the control unit 112 according to the present example determines whether a condition of the additional cleaning is matched on analysis request No. 3 in which the same post-specimen B is used. Here, in analysis request No. 3, it is understood that test item Z and serum which is a specimen type are registered in setting No. 3 of the additional cleaning, as illustrated in Fig. 2. The patient specimen which is a specimen use of the pre-specimen (specimen A before switching) and the number of times the pre-specimen (specimen A before switching) is dispensed match the condition of setting No. 3 of the additional cleaning, as illustrated in Fig. 2. Accordingly, in the present example, the additional cleaning in which only water is used is performed between analysis requests No. 1 and No. 2.

According to the present example, although an influence of the carry-over of the pre-specimen is small for a test item immediately after the switching of the specimen or an influence of the carry-over of the pre-specimen is large for a subsequent test item in which the post-specimen is used, the additional cleaning is performed before the switching of the specimen. Therefore, it is possible to prevent cross-contamination more reliably, and thus analysis accuracy is improved.

The present invention is not limited to the above-described Examples 1 and 2, and includes various modification examples. For example, the control unit 112 may determine necessity and non-necessity of the additional cleaning based on a dispensing amount of the pre-specimen instead of or in addition to the number of times the pre-specimen is dispensed. When the dispensing amount of the pre-specimen is greater than a predetermined value, the specimen intrudes into the inside of the inner wall of the nozzle of the dispensing mechanism and a risk of contaminating a nozzle increases. Therefore, the additional cleaning is set to be performed. Since information regarding how many ml of a dispensing amount is dispensed is registered in advance in the storage unit 113, the necessity and non-necessity of the additional cleaning can be determined as preparation of the analysis of the post-specimen before completion of the analysis of the pre-specimen, and thus a processing capability of the analysis device is inhibited from deteriorating.

While the above-described Examples 1 and 2 have been described, Examples 1 and 2 have been described in detail to facilitate description of the present invention, Examples 1 and 2 are not limited to examples in which all the configurations are included. Further, some of the configurations according to a certain example may be substituted with configurations of another example, and configurations of another example may be added to configurations of a certain example. Other configurations can also be added to, deleted from, or substituted with some of the configurations according to each example.

### Reference Signs List

- 100:: specimen container
- 101:: specimen rack
- 102:: reagent container
- 103:: reagent disk
- 104:: reaction container
- 105:: reaction disk
- 106:: specimen dispensing mechanism
- 107:: reagent dispensing mechanism
- 108:: cleaning unit
- 109:: detergent setup unit
- 110:: input unit
- 111:: computer
- 112:: control unit
- 113:: storage unit
- 114:: display unit
- 301:: setting region
- 302:: registration button
- 303:: cancellation button

## Claims

1. An automatic analysis device comprising:
a dispensing mechanism configured to aspirate and discharge a specimen;
a cleaning unit configured to clean the dispensing mechanism; and
a control unit configured to determine whether to perform additional cleaning in addition to normal cleaning performed at each dispensing,
wherein the control unit is configured to perform the determination based on a use of a pre-specimen dispensed before a post-specimen to be dispensed by the dispensing mechanism.

2. The automatic analysis device according to claim 1, wherein, based on a type of a control specimen of the pre-specimen, the control unit is configured to determine necessity or non-necessity of the additional cleaning.

3. The automatic analysis device according to claim 1, wherein, based on a type of calibrator of the pre-specimen, the control unit is configured to determine necessity or non-necessity of the additional cleaning.

4. An automatic analysis device comprising:
a dispensing mechanism configured to aspirate and discharge a specimen;
a cleaning unit configured to clean the dispensing mechanism; and
a control unit configured to determine whether to perform additional cleaning in addition to normal cleaning performed at each dispensing,
wherein the control unit is configured to perform the determination based on the number of times of dispensing or a dispensing amount of a pre-specimen dispensed before a post-specimen to be dispensed by the dispensing mechanism.

5. The automatic analysis device according to claim 1 or 2, wherein the control unit is configured to determine a predetermined pattern from a plurality of cleaning patterns related to the additional cleaning.

6. The automatic analysis device according to claim 1 or 2, wherein the control unit is configured to determine whether to perform the additional cleaning in consideration of a test item of the post-specimen.

7. The automatic analysis device according to claim 6, wherein, in a case in which the post-specimen is dispensed a plurality of times and is used for another test item, the additional cleaning is performed before first dispensing of the post-specimen when a test item on which the additional cleaning is to be performed is included.

8. An automatic analysis method comprising:
a dispensing step of aspirating and discharging a specimen by a dispensing mechanism;
a normal cleaning step of cleaning the dispensing mechanism at each dispensing; and
an additional cleaning step of performing an additional cleaning when a control unit determines necessity of the additional cleaning,
wherein the control unit is configured to determine necessity or non-necessity of the additional cleaning based on a use, the number of times of dispensing, or a dispensing amount of a pre-specimen dispensed before a post-specimen to be dispensed by the dispensing mechanism.
